# FASCICULE DE BREVET EUROPEEN

(11) **EP 4 533 913 B1**
(45) Date de publication et mention de la délivrance du brevet: **29.07.2026**
(21) Numéro de dépôt: 23714244.3
(22) Date de dépôt: 16.03.2023
(51) Int. Cl.: H05K 5/00, H01H 85/20, B60R 16/023

(54) **SUPPORT DE BOÎTIER ÉLECTRONIQUE POUR VEHICULES AUTOMOBILES**
HALTERUNG FÜR EIN ELEKTRONIKGEHÄUSE EINES KRAFTFAHRZEUGS
SUPPORT FOR AN ELECTRONICS HOUSING OF A MOTOR VEHICLE

(30) Priorité: 30.05.2022 FR 2205127
(43) Date de publication de la demande: 09.04.2025
(73) Titulaire: Stellantis Auto SAS, 78300 Poissy (FR)
(72) Inventeur: ABOUFARIS, Ilham, Ain Taoujdate, 51100 (MA)
(74) Mandataire: PSIP
(86) Numéro de dépôt international: PCT/FR2023/050367
(87) Numéro de publication internationale: WO 2023/233087

(56) Documents cités:
- WO-A2-2019/170969
- FR-A1- 3 060 935
- FR-A1- 3 078 513
- FR-B1- 3 060 935

## Description

L'invention concerne, de façon générale, le domaine de l'implantation de boîtiers électroniques sur des véhicules automobiles et s'intéresse, plus particulièrement, au mode de fixation d'un boîtier de relais de fusibles sur la structure d'un véhicule.

Actuellement, la fixation de boîtiers électroniques est réalisée, de manière traditionnelle, au moyen d'un support du type comprenant une platine présentant une face externe recevant le boîtier, des moyens d'assemblage permettant de solidariser la platine et le boîtier et des moyens d'arrimage permettant de solidariser le support à la structure du véhicule.

Un tel support de boîtier est décrit, notamment, dans le brevet FR3078513B1 où il est destiné à un système audio. Ce support, qui est conçu pour une implantation dans la partie latérale du coffre du véhicule, comporte des bras de retenue s'étendant transversalement en saillie depuis la face externe de la platine et présentant des extrémités libres recourbées prévues pour reposer en appui contre la face interne de la garniture latérale d'habillage du coffre.

Cependant, les boîtiers pour les relais de fusibles ont, quant à eux, des caractéristiques différentes et, notamment, des dimensions plus imposantes. Ils sont généralement étanches et destinés à être implantés à l'avant du véhicule sur les déflecteurs d'air. Dans ces conditions les supports traditionnels n'offrent pas de solution de montage adaptée et satisfaisante.

Il existe des supports de boîtier de fusibles comprenant des moyens de fixation amovible sur un élément de structure du véhicule, tel qu'un déflecteur d'air. Ces moyens de fixation comportent, respectivement, deux bras parallèles reliés par une entretoise horizontale soutenant le boîtier, une plaque prolongeant l'entretoise vers le bas en venant en appui contre la face externe d'une paroi verticale du déflecteur et au travers de laquelle est ménagé un alésage pour l'introduction d'un organe de vissage, une patte flexible apte à coopérer par encliquetage avec un organe complémentaire prévu sur la paroi du déflecteur et une glissière de guidage en translation apte à coopérer avec cette paroi.

Toutefois, le mode de fixation de ces boîtiers au moyen de ces supports reste problématique, en particulier, lorsqu'il s'agit de boîtiers de relais de fusibles destinés, plus spécifiquement, à des véhicules à motorisation électrique ou hybride. En effet, d'une part, l'encombrement de ces boîtiers est important car ils contiennent de nombreux fusibles et, d'autre part, l'espace disponible est restreint par la présence d'un important faisceau de câbles destinés, dans la zone d'implantation de ces boîtiers, à l'alimentation des projecteurs du système d'éclairage.

Ainsi, les opérations de montage et de démontage de ces boîtiers est complexe et laborieuse, d'autant que leur support, dans sa forme actuelle, a tendance à tourner autour de son unique point de fixation lors de son vissage sur la structure. En outre, avec le support existant, la fixation du boîtier n'est pas stable dans le temps car elle s'avère très sensible aux vibrations émanant de son environnement direct, ce qui entraîne des risques de court-circuit ou de pannes électriques.

Le document FR 3 060 935 divulgue un véhicule automobile conforme au préambule de la revendication 1.

Dans ce contexte, l'invention a cherché à simplifier le mode de fixation des boîtiers de relais de fusibles en proposant un support perfectionné à profil de « fourchette » combinant des fonctions de maintien, d'anti-rotation et de vissage tout en garantissant une tenue vibratoire robuste tout au long du cycle de vie du véhicule.

Ce but est atteint, selon l'invention, au moyen d'un véhicule automobile pourvu d'au moins un boîtier de relais de fusibles fixé sur une paroi verticale d'un élément de structure au moyen d'un support, ledit support comprenant, deux bras parallèles reliés par une entretoise horizontale soutenant le boîtier, une plaque prolongeant l'entretoise vers le bas en venant en appui contre la face externe de la paroi verticale de l'élément de structure et au travers de laquelle est ménagé un alésage pour l'introduction d'un organe de vissage, une patte flexible apte à coopérer par encliquetage avec un organe complémentaire prévu sur ledit élément de structure et une glissière de guidage en translation apte à coopérer avec ladite paroi de l'élément de structure, caractérisé en ce que ledit support comporte, en outre, un coin assurant le blocage en rotation du support en venant en prise avec le bord supérieur de la paroi verticale de l'élément de structure de telle sorte que ladite paroi soit emprisonnée entre la patte flexible et ladite glissière, la glissière étant formée d'un doigt s'étendant parallèlement à la patte flexible et destiné à coulisser au contact de la face externe de la paroi de l'élément de structure.

Selon une caractéristique avantageuse de l'invention, la patte flexible du support s'étend parallèlement à la paroi de l'élément de structure et vient en appui contre la face interne de cette paroi.

De préférence, la patte porte un ergot destiné à venir s'encliqueter dans un orifice ménagé en regard dans la paroi de l'élément de structure.

Selon encore une autre caractéristique du support, le coin s'étend en saillie sous l'entretoise et au-dessus de la patte flexible.

Selon une variante de réalisation spécifique du support de l'invention, l'alésage est positionné entre la patte flexible et le coin anti-rotation.

Selon une autre variante, la glissière est positionnée sous la patte flexible.

Selon d'autres caractéristiques, le coin comprend une face inférieure en biseau dont le profil est complémentaire localement du bord supérieur de la paroi verticale de l'élément de structure.

De préférence, le coin fait saillie au-delà de la face interne de la paroi de l'élément de structure.

L'invention permet d'effectuer des montage et démontage d'un boîtier de fusibles sur un élément de structure de véhicule, tel qu'un déflecteur d'air, de manière simple, rapide, aisée et via un seul point de fixation.

En effet, grâce au profil en « fourchette » du support combinant à la fois une anti-rotation angulaire, un encliquetage et un coulissement, la paroi de cet élément de structure est prise en sandwich et la rotation du support est bloquée pendant le vissage par l'opérateur qui, le cas échéant, peut même être effectué ainsi à l'aveugle.

En outre, la fixation du boîtier est robuste dans le temps et offre un résistance mécanique accrue aux vibrations .

D'autres caractéristiques et avantages de l'invention ressortiront à la lecture de la description qui va suivre, en référence aux figures annexées, pour lesquelles :
[Fig. 1] est une vue de face d'un mode de réalisation préférentiel du support de boîtier de fusibles selon l'invention.
[Fig. 2] est une vue de de derrière du support de boîtier de fusibles de la figure 1.
[Fig. 3] est une vue partielle en perspective du support de boîtier de fusibles de la figure 1.
[Fig. 4] est une vue de face du montage du support de l'invention sur un élément de structure d'un véhicule avec un boîtier de fusibles.
[Fig. 5] est une vue de profil (côté face interne de la paroi de l'élément de structure) du montage du support de l'invention avec un boîtier de fusibles.
[Fig. 6] est une vue partielle de côté et en coupe transversale du montage du support de l'invention avec un boîtier de fusibles.

Pour plus de clarté, les éléments identiques ou similaires sont repérés par des signes de référence identiques sur l'ensemble des figures.

Naturellement, les modes de réalisation du support de boîtier de fusibles selon l'invention illustrés schématiquement par les figures présentées ci-dessus et décrites ci-après, ne sont donnés qu'à titre d'exemples non limitatifs. Il est explicitement prévu dans le cadre de l'invention que l'on puisse proposer et combiner entre eux différents modes pour en proposer d'autres.

Il est précisé que toutes les caractéristiques, telles qu'elles se dégagent pour un homme du métier à la lecture de la présente description, des figures et des revendications associées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que le contexte technique rende de telles combinaisons impossibles ou dénuées de sens.

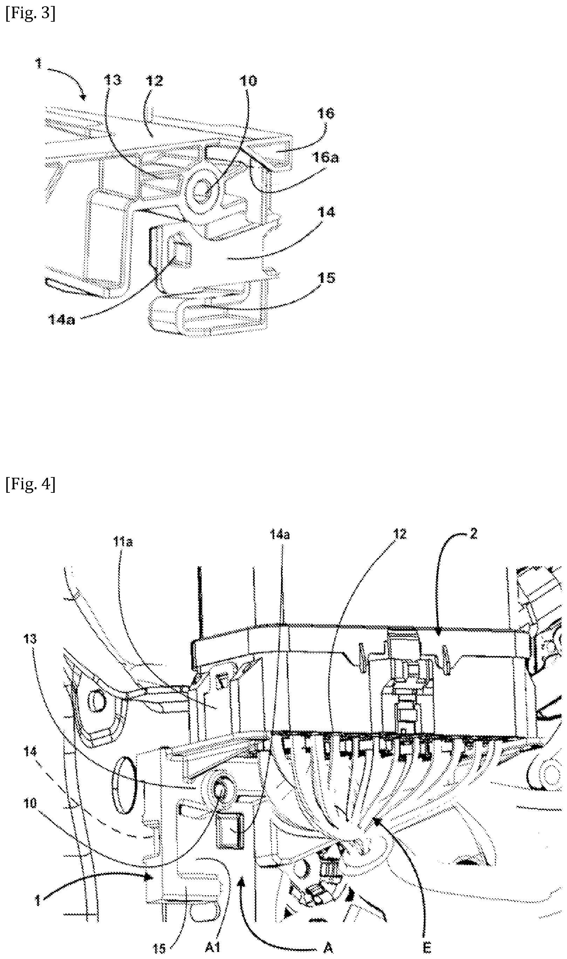

L'invention concerne le domaine général de l'implantation d'un boîtier 2 de relais de fusibles sur un élément A de structure d'un véhicule automobile dans un environnement restreint, notamment, du fait de la présence d'un important faisceau de câbles électriques E (figure 4) qui entrave les opérations de fixation manuelle du boîtier par un opérateur.

Dans ce contexte, l'invention a cherché à développer un support perfectionné permettant, à la fois, de simplifier les opérations de montage du boîtier et d'assurer une fixation stable et robuste dans le temps malgré la présence de vibrations.

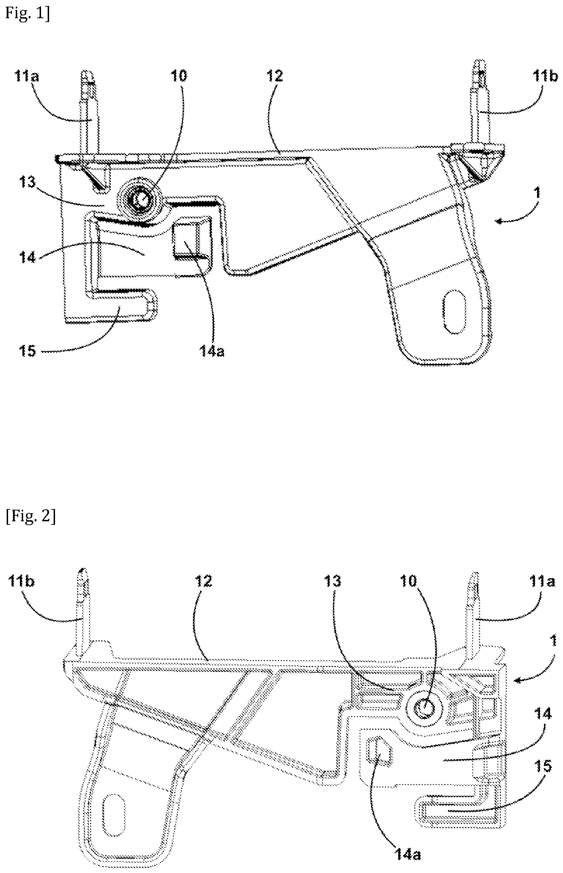

Comme illustré par les figures 1 et 2 annexées, le support 1, qui est destiné à être monté sur la paroi sensiblement verticale d'un élément A de la structure (voir figures 4 à 6) d'un véhicule automobile, comprend, de manière traditionnelle, deux bras parallèles 11a, 11b reliés par une entretoise horizontale 12 soutenant le boîtier 2.

Ce support comprend, en outre, une plaque 13 prolongeant l'entretoise 12 vers le bas et venant en appui contre la face externe A1 de la paroi verticale de l'élément A de structure. Un alésage 10 pour l'introduction d'un organe de vissage 3 (visible sur les figures 4 à 6) est ménagé au travers de la paroi.

Le support 1 comporte aussi une patte flexible 14 apte à coopérer par encliquetage avec un organe complémentaire prévu sur l'élément A de structure et une glissière 15 de guidage en translation apte à coopérer avec la paroi de l'élément A.

Selon l'invention, il est prévu que ce support 1 comporte, de façon spécifique et complémentaire aux moyens mentionnés ci-dessus, un coin 16 assurant le blocage en rotation du support et venant en prise avec le bord supérieur A2 de la paroi verticale de l'élément A de structure.

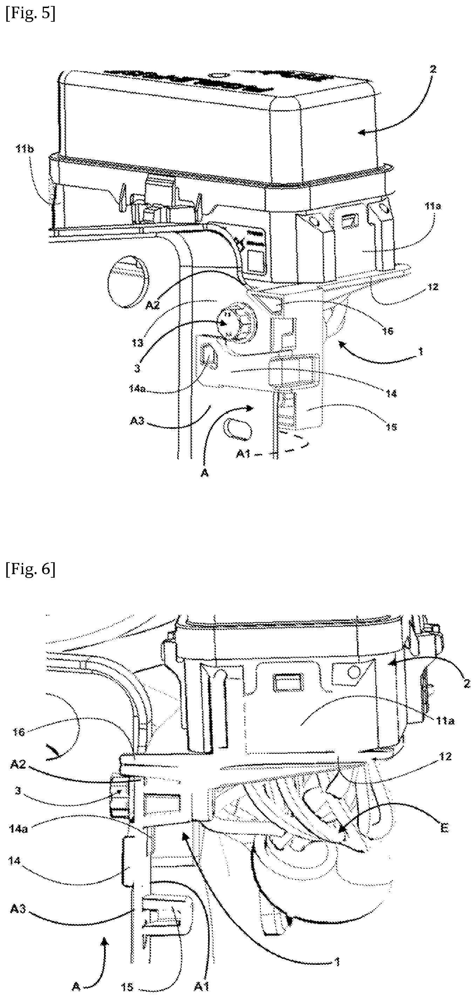

Sur le support 1 de l'invention, la combinaison de la patte 14, de la glissière 15 et du coin 16 permet d'emprisonner en sandwich la paroi de l'élément A de structure à la manière d'une fourchette, comme illustré par la figure 5 en assurant ainsi le maintien, le positionnement et le calage de ce support avant même la pose et le serrage final de l'organe de vissage 3.

Le coin 16 s'étend en saillie sous l'entretoise 13 et au-dessus de la patte flexible 14 et comprend une face inférieure 16a en biseau dont le profil est complémentaire localement du bord supérieur A2 de la paroi verticale de l'élément A de structure. De préférence, le coin 16 fait saillie au-delà de la face interne A3 de la paroi de l'élément de structure.

Dans le mode de réalisation de l'invention illustré, notamment, par la figure 5, la patte flexible 14 du support 1 s'étend parallèlement à la paroi de l'élément A de structure et vient en appui contre la face interne A3 de cette paroi. L'alésage destiné à recevoir l'organe de vissage 3 du support 1 sur l'élément A de structure est positionné entre la patte flexible 14 et le coin anti-rotation 16.

La patte 14 porte ici un ergot 14a destiné à venir s'encliqueter dans un orifice A4 ménagé en regard au travers de la paroi de l'élément A de structure et formant l'organe complémentaire de coopération entre la paroi et le support 1.

La glissière 15 est formée, quant à elle, d'un doigt 15a s'étendant parallèlement à la patte flexible 14 et destiné à coulisser au contact de la face externe A1 de la paroi de l'élément A de la structure. Cette glissière est positionnée ici sous la patte flexible 14.

## Revendications

1. Véhicule automobile pourvu d'au moins un boîtier (2) de relais de fusibles fixé sur une paroi verticale d'un élément (A) de structure au moyen d'un support (1), ledit support comprenant, deux bras parallèles (11a, 11b) reliés par une entretoise horizontale (12) soutenant le boîtier, une plaque (13) prolongeant l'entretoise (12) vers le bas en venant en appui contre la face externe (A1) de la paroi verticale de l'élément (A) de structure et au travers de laquelle est ménagé un alésage (10) pour l'introduction d'un organe de vissage (3), une patte flexible (14) apte à coopérer par encliquetage avec un organe complémentaire prévu sur ledit élément de structure et une glissière (15) de guidage en translation apte à coopérer avec ladite paroi de l'élément de structure, ledit support (1) comportant, en outre, un coin (16) assurant le blocage en rotation du support en venant en prise avec le bord supérieur (A2) de la paroi verticale de l'élément de structure de telle sorte que ladite paroi soit emprisonnée entre la patte flexible (14) et ladite glissière (15), **caractérisé en ce que** ladite glissière (15) est formée d'un doigt s'étendant parallèlement à la patte flexible (14) et destiné à coulisser au contact de la face externe (A1) de la paroi de l'élément (A) de structure.

2. Véhicule automobile selon la revendication 1, **caractérisé en ce que** ladite patte flexible (14) s'étend parallèlement à la paroi de l'élément (A)de structure et vient en appui contre la face interne (A3) de ladite paroi.

3. Véhicule automobile selon la revendication précédente, **caractérisé en ce que** ladite patte (14) porte un ergot (14a) destiné à venir s'encliqueter dans un orifice (A4) ménagé en regard dans la paroi de l'élément (A) de structure.

4. Véhicule automobile selon l'une des revendications précédentes, **caractérisé en ce que** ledit coin (16) s'étend en saillie sous ladite entretoise (12) et au-dessus de la patte flexible (14).

5. Véhicule automobile selon l'une des revendications précédentes, **caractérisé en ce que** ledit alésage (10) est positionné entre la patte flexible (14) et le coin anti-rotation (16).

6. Véhicule automobile selon l'une des revendications précédentes, **caractérisé en ce que** ladite glissière (15) est positionnée sous la patte flexible (14).

7. Véhicule automobile selon l'une des revendications précédentes, **caractérisé en ce que** le coin (16) comprend une face inférieure (16a) en biseau dont le profil est complémentaire localement du bord supérieur (A2) de la paroi verticale de l'élément (A) de structure.

8. Véhicule automobile selon la revendication précédente, **caractérisé en ce que** le coin (16) fait saillie au-delà de la face interne (A3) de la paroi de l'élément de structure.

## Patentansprüche

1. Kraftfahrzeug mit wenigstens einem Gehäuse (2) für Sicherungsrelais, das mittels einer Halterung (1) an einer vertikalen Wand eines Strukturelements (A) befestigt ist, wobei die Halterung zwei parallele Arme (11a, 11b) aufweist, die durch eine das Gehäuse abstützende horizontale Strebe (12) verbunden sind, eine Platte (13), die die Strebe (12) nach unten verlängert, indem sie gegen die Außenseite (A1) der vertikalen Wand des Strukturelements (A) drückt und durch die eine Bohrung (10) für die Einführung eines Schraubglieds (3), einer flexiblen Lasche (14), die mit einem an dem Strukturelement vorgesehenen komplementären Element durch Einrasten zusammenwirken kann, und einer verschiebbaren Führungsschiene (15), die mit der Wand des Strukturelements zusammenwirken kann, wobei der Träger (1) ferner einen Keil (16) aufweist, der die drehbare Sicherung des Trägers durch Eingriff mit dem oberen Rand (A2) der vertikalen Wand des Strukturelements sicherstellt, sodass die Wand zwischen der flexiblen Lasche (14) und der Schiene (15) eingeschlossen ist, **dadurch gekennzeichnet, dass** die Gleitschiene (15) aus einem Finger besteht, der sich parallel zur flexiblen Lasche (14) erstreckt und dazu bestimmt ist, in Kontakt mit der Außenfläche (A1) der Wand des Strukturelements (A) zu gleiten.

2. Kraftfahrzeug nach Anspruch 1, **dadurch gekennzeichnet, dass** sich die flexible Lasche (14) parallel zur Wand des Strukturelements (A) erstreckt und an der Innenseite (A3) der Wand zur Anlage kommt.

3. Kraftfahrzeug nach dem vorhergehenden Anspruch, **dadurch gekennzeichnet, dass** die Lasche (14) einen Zapfen (14a) trägt, der dazu bestimmt ist, in eine Öffnung (A4) einzugreifen, die in der Wand des Strukturelements (A) gegenüberliegend ausgebildet ist.

4. Kraftfahrzeug nach einem der vorhergehenden Ansprüche, **dadurch gekennzeichnet, dass** sich der Keil (16) unter dem Steg (12) und über die biegsame Lasche (14) erstreckt.

5. Kraftfahrzeug nach einem der vorhergehenden Ansprüche, **dadurch gekennzeichnet, dass** die Bohrung (10) zwischen der flexiblen Lasche (14) und dem Drehungsverhinderungskeil (16) angeordnet ist.

6. Kraftfahrzeug nach einem der vorhergehenden Ansprüche, **dadurch gekennzeichnet, dass** die Gleitschiene (15) unter der biegsamen Lasche (14) angeordnet ist.

7. Kraftfahrzeug nach einem der vorhergehenden Ansprüche, **dadurch gekennzeichnet, dass** der Keil (16) eine abgeschrägte Unterseite (16a) aufweist, deren Profil lokal komplementär zum oberen Rand (A2) der vertikalen Wand des Strukturelements (A) ist.

8. Kraftfahrzeug nach dem vorhergehenden Anspruch, **dadurch gekennzeichnet, dass** der Keil (16) über die Innenfläche (A3) der Wandung des Strukturelements hinausragt.

## Claims

1. Motor vehicle provided with at least one fuse relay housing (2) fixed to a vertical wall of a structural item (A) by means of a support (1), said support comprising two parallel arms (11 a, 11 b) connected by a horizontal spacer (12) supporting the housing, a plate (13) extending the spacer (12) downwards by coming to bear against the outer face (A 1) of the vertical wall of the structural item (A) and through which a bore (10) is formed for the introduction of a screwing member (3), a flexible tab (14) able to cooperate by snap-fastening with a complementary member provided on said structural item and a guide slide (15) able to cooperate in translation with said item structural standstill , said support (1) further comprising a wedge (16) for rotating the support by engaging with the upper edge (A 2) of the vertical wall of the structural item so that said wall is trapped between the flexible tab (14) and said slide (15), wherein said slide (15) is made up of a finger extending parallel to the flexible tab (14) and intended to slide in contact with the outer face (A1) of the wall of the structural item (A).

2. A motor vehicle according to claim 1, wherein said flexible tab (14) extends parallel to the wall of the structural item (A) and bears against the inner face (A 3) of said wall.

3. A motor vehicle according to claim 1, wherein said lug (14) gates a lug (14a) intended to be snap-fastened in an orifice (A4) arranged opposite in the wall of the structural item (A).

4. Motor vehicle according to one of the previous claims, wherein said wedge (16) projects under said spacer (12) and above the flexible tab (14).

5. Motor vehicle according to one of the previous claims, wherein said bore (10) is positioned between the flexible tab (14) and the anti-rotation wedge (16).

6. Motor vehicle according to one of the previous claims, wherein said slide (15) is positioned under the flexible tab (14).

7. Motor vehicle according to one of the previous claims, wherein the wedge (16) comprises a bevelled lower face (16 a) whose profile is locally complementary to the upper edge (A2) of the vertical wall of the structural item (A).

8. A motor vehicle according to claim previous, wherein the wedge (16) projects beyond the inner face (A3) of the wall of the structural item.
